# EUROPÄISCHE PATENTSCHRIFT

(11) **EP 0 910 445 B1**
(45) Veröffentlichungstag und Bekanntmachung des Hinweises auf die Patenterteilung: **12.12.2001**
(21) Anmeldenummer: 97930456.5
(22) Anmeldetag: 01.07.1997
(51) Int. Cl.: B01D 3/00

(54) **FLÜSSIGKEITSVERTEILER FÜR EINE STOFFAUSTAUSCHKOLONNE**
FLUID-DISTRIBUTOR FOR A SUBSTANCE-EXCHANGE COLUMN
DISTRIBUTEUR DE LIQUIDE POUR COLONNE ECHANGEUSE DE SUBSTANCES

(30) Priorität: 04.07.1996 DE 19626895
(43) Veröffentlichungstag der Anmeldung: 28.04.1999
(73) Patentinhaber: Linde Aktiengesellschaft, 65189 Wiesbaden (DE)
(72) Erfinder: MATTEN, Christian, D-80689 München (DE); MOLL, Anton, D-82399 Raisting (DE)
(74) Vertreter: Imhof, Dietmar
(86) Internationale Anmeldenummer: EP9703416
(87) Internationale Veröffentlichungsnummer: WO9801203

(56) Entgegenhaltungen:
- EP-A- 0 153 974
- EP-A- 0 273 191
- EP-A- 0 607 887
- GB-A- 2 046 623

## Beschreibung

Die Erfindung betrifft einen Flüssigkeitsverteiler für eine Stoffaustauschkolonne und ein entsprechendes Verfahren, wobei der Flüssigkeitsverteiler mindestens einen Hauptkanal und eine Vielzahl von Verteilkanäien aufweist, die mit dem Hauptkanal in Strömungsverbindung stehen und mit Flüssigkeitsaustrittsöffnungen versehen sind, deren effektive Länge L kleiner als ihr Durchmesser D ist, wobei die effektive Länge L durch den Teil der Begrenzung der Austrittsöffnung festgelegt ist, der im Betrieb des Verteilers von der Flüssigkeit benetzt wird, und der Durchmesser D die maximale lineare Ausdehnung des freien Querschnitts der Flüssigkeitsaustrittsöffnung bezeichnet.

Derartige Verteiler dienen zur Verteilung von Flüssigkeit über den Querschnitt einer Stoffaustauschkolonne, insbesondere oberhalb eines mit geordneter oder ungeordneter Packung ausgestatteten Abschnitts. Sie sind beispielsweise aus einem Aufsatz von P. Bomio et al., Chem. Tech., 43.Jg., Heft 11/12. 1991 bekannt und werden dort als Rohrverteiler, Elementverteiler oder Kanalverteiler bezeichnet. Diese Typen von Flüssigkeitsverteilern weisen horizontal ausgerichtete Verteilkanäle, die von mindestens einem Hauptkanal gespeist werden, der in der Regel senkrecht zu den Verteilkanälen verläuft. Bei einem Rohrverteiler sind die Verteilkanäle an ihrer Oberseite geschlossen, bei einem Element- oder Kanalverteiler sind sie oben offen. Dabei tritt das Problem auf, daß durch die Strömung in Längsrichtung der Verteilkanäle eine ungleichmäßige Verteilung von Flüssigkeit bewirkt wird. Je nachdem, wie weit eine Flüssigkeitsaustrittsöffnung vom Flüssigkeitseintritt in den Verteilkanal entfernt ist, wird sie von der Flüssigkeit mit unterschiedlicher Austrittsgeschwindigkeit durchströmt.

Der Erfindung liegt daher die Aufgabe zugrunde, einen Verteiler und ein Verfahren der eingangs genannten Art zu entwickeln, der eine besonders hohe Verteilgüte ermöglicht und einen relativ geringen Herstellungsaufwand erfordert.

Diese Aufgabe wird vorrichtungsseitig dadurch gelöst, daß sich der Lochquerschnitt D der Flüssigkeitsaustrittsöffnungen an der Innenseite der Verteilkanäle von dem Lochquerschnitt E an der Außenseite der Verteilkanäle unterscheidet.

Hinsichtlich des Verfahrens zum Verteilen von Flüssigkeit in einer Stoffaustauschkolonne mittels eines Flüssigkeitsverteilers, wobei die Flüssigkeit über einen Hauptkanal in eine Vielzahl von Verteilkanälen strömt und aus in den Verteilkanälen befindlichen Flüssigkeitsaustrittsöffnungen austritt, wobei die Flüssigkeit die Flüssigkeitsaustrittsöffnung auf einer Länge benetzt, welche kleiner als der Durchmesser D der Flüssigkeitsaustrittsöffnung ist, wobei der Durchmesser D die maximale lineare Ausdehnung des freien Querschnitts der Flüssigkeitsaustrittsöffnung bezeichnet, wird diese Aufgabe dadurch gelöst, daß die Flüssigkeit die Flüssigkeitsaustrittsöffnung auf ihrem gesamten Umfang, jedoch nicht auf ihrer gesamten Länge benetzt.

Unter Durchmesser wird hier die maximale lineare Ausdehnung des freien Lochquerschnitts verstanden im allgemein üblichen Fall von kreisförmigen Flüssigkeitsaustrittsöffnungen ist dies der Kreisdurchmesser an der engsten Stelle der Flüssigkeitsaustrittsöffnung. Die Flüssigkeitsaustrittsöffnungen sind im allgemeinen in einem horizontal ausgerichteten Wandabschnitt des Verteilkanals angeordnet, so daß sie von der die Flüssigkeit in im wesentlicher vertikaler Strömungsrichtung durchflossen werden.

Die effektive Lochlänge ist durch den Teil der Lochbegrenzung festgelegt, der im Betrieb des Verteilers von der Flüssigkeit benetzt wird. Zum Beispiel ist bei einer Flüssigkeitsaustrittsöffnung, deren Querschnitt sich nach oben verjüngt, die effektive Lochlänge geringer als die geometrische. Flüssigkeitsaustrittsöffnungen mit dieser Eigenschaft werden im folgenden auch als Blendenlöcher bezeichnet. Bei den im Rahmen der Erfindung angestellten Versuchen hat sich überraschenderweise herausgestellt, daß die Verwendung derartiger Blendenlöcher zu einer wesentlich verbesserten Verteilgüte führt.

Das Verhältnis L/D zwischen effektiver Länge und Lochdurchmesser der Flüssigkeitsaustrittsöffnungen ist kleiner als 1, vorzugsweise kleiner oder gleich 0,9, kleiner oder gleich 0, 8, kleiner oder gleich 0,7, oder kleiner oder gleich 0,6.

Die effektive Länge der Flüssigkeitsaustrittsöffnungen ist vorzugsweise geringer als deren geometrische Länge. Die Lochgeometrie wird so gewählt, daß die im Betrieb von der Flüssigkeit benetzte Lochlänge kleiner als die Wandstärke der Verteilkanäle ist.

Von Vorteil wird die im Vergleich zur geometrischen Lochlänge verminderte effektive Lochlänge dadurch erreicht, daß der Lochquerschnitt der Flüssigkeitsaustrittsöffnungen an der Innenseite der Verteilkanäle geringer als der Lochquerschnitt an der Außenseite der Verteilkanäle ist. Die Flüssigkeitsaustrittsöffnung kann von außen nach innen konisch zulaufend ausgebildet sein. Die Querschnittsflächen des Loches an der Innen- und der Außenseite können auch unterschiedlich geformt sein, bevorzugt sind sie jedoch gleich, besonders bevorzugt sind beide kreisförmig. Als besonders zweckmäßig hat es sich herausgestellt, Flüssigkeitsaustrittsöffnungen in Form von Stufenbohrungen vorzusehen, d.h. einer durch die gesamte Wandstärke des Verteilkanals verlaufenden Bohrung und einem konzentrisch mit dieser Bohrung angeordneten Sackloch, welches von außen nur in einen Teil der Wandstärke des Verteilkanals eindringt.

Es kann aber auch sinnvoll sein, an der Innenseite der Verteilkanäle einen größeren Lochquerschnitt der Flüssigkeitsaustrittsöffnungen vorzusehen als an der Außenseite der Verteilkanäle. Insbesondere bei nach oben offenen Verteilkanälen kann diese Variante herstellungstechnisch Vorteile bringen. Die Lochgeometrie wird von Vorteil analog zu den in obigem Abschnitt beschriebenen Varianten gewählt. Stufenbohrungen haben sich auch bei dieser Ausgestaltung als günstig erwiesen.

Von Vorteil sind die Verteilkanäle zumindest teilweise nach oben abgeschlossen. Sogenannte Rohrverteiler in Kombination mit den erfindungsgemäßen Austrittsöffnungen sind besonders günstig, da so auch bei Lastwechseln eine hohe Verteilgüte der Flüssigkeit gewährleistet wird. Zweckmäßigerweise besitzt der Rohrverteiler ein kreisförmiges oder rechteckförmiges Profil. Dadurch können handelsübliche Rohre bzw. Rechteckprofile eingesetzt werden. Rechteckförmige Verteilkanäle haben zudem den Vorteil, daß sie leicht an den Hauptkanal montiert werden können.

Aus Stabilitätsgründen liegt die Wandstärke der Verteilkanäle bevorzugt zwischen 1,5 mm und 12 mm, besonders bevorzugt zwischen 2 mm und 6 mm. Überschreitet, insbesondere bei kleinen Lochdurchmessem, die Wandstärke den Durchmesser der Flüssigkeitsaustrittsöffnung, so wird die Lochgeometrie so abgeändert, daß die effektive Lochlänge gemäß der Erfindung kleiner als der Lochdurchmesser wird.

Der Durchmesser der Austrittsöffnungen beträgt vorteilhaft 1 bis 10 mm, besonders vorteilhaft 2 bis 6 mm. Es hat sich herausgestellt, daß bei dieser Wahl des Lochdurchmessers eine besonders günstige Verteilung der Flüssigkeit erzielt wird.

Aus fertigungstechnischer Sicht ist es günstig, Verteilkanäle einzusetzen, die aus Strangpreßprofilen oder aus miteinander verbundenen Einzelteilen gefertigt sind. Aufgrund ihres geringen Gewichtes sind Verteilkanäle aus Kunststoff oder aus Aluminium vorteilhaft.

Die Flüssigkeitsaustrittsöffnungen sind bevorzugt im Boden der Verteilkanäle angeordnet. Eine hohe Verteilgüte wird aber auch erreicht, wenn sich die Austrittsöffnungen in den Seitenwänden der Verteilkanäle, besonders vorteilhaft im unteren Drittel der Seitenwände befinden.

Der Flüssigkeitsverteiler kann außerdem einen innerhalb der Verteilkanäle im wesentlich horizontal angeordneten Strömungszerleger aufweisen. Unter Strömungszerleger wird hier eine Apparatur verstanden, die ein in einer Richtung (z.B. horizontal) strömendes Medium in zwei Teilströme mit verschiedener Richtung aufteilt (z.B. in einen weiterhin horizontalen Strom und einen mit vertikaler Richtungskomponente). Der Strömungszerleger ist vorzugsweise so angeordnet, daß er sich während des Betriebs des Verteilers unterhalb der Oberfläche der im entsprechenden Verteilkanal anstehenden beziehungsweise fließenden Flüssigkeit befindet. Er bewirkt einen Strömungswiderstand in vertikaler Richtung. Dadurch entstehen zwei Strömungsquerschnitte; im oberen wird die Flüssigkeit längs des Verteilkanals transportiert, im unteren entsteht allein eine Strömung in Richtung Flüssigkeitsaustrittsöffnung. Der Abbau der horizontalen Strömungsgeschwindigkeit unmittelbar über dem Loch bewirkt ein weitere Verbesserung der Verteilgüte.

Der Strömungszerleger weist vorzugsweise ein Lochblech auf. Dieses enthält mindestens einen im wesentlichen horizontalen Abschnitt. Das Öffnungsverhältnis beträgt in diesem Bereich beispielsweise 3 bis 13 %, vorzugsweise 5 bis 8 %, höchst vorzugsweise etwa 5 %,

Die Erfindung betrifft außerdem eine Stoffaustauschkolonne mit einem derartigen Verteiler sowie die Verwendung einer solchen Stoffaustauschkolonne zur Tieftemperaturzerlegung von Luft.

Die Erfindung sowie weitere Einzelheiten der Erfindung werden im folgenden anhand von in den Zeichnungen dargestellten Ausführungsbeispielen näher erläutert. Hierbei zeigen:
- Figur 1: den Vedeilkanal einer ersten Ausführungsform des erfindungsgemäßen Flüssigkeitsverteilers im Querschnitt und
- Figur 2: den Verteilkanal einer weiteren Ausführungsform des erfindungsgemäßen Flüssigkeitsverteilers ebenfalls im Querschnitt.

Der Grundaufbau des Verteilers kann bei beiden Ausführungsbeispielen dieselbe sein. Die entsprechende Verbindung zwischen Hauptkanal und Verteilkanälen ist in der EP 0607887 A2 (Figuren 3 und 4) gezeigt. Die Erfindung kann jedoch auch bei anderen Grundformen von Rohr-, Element- oder Kanalverteiler eingesetzt werden.

Die Blendenlöcher können grundsätzlich auf zwei verschiedene Weisen realisiert werden, nämlich entweder durch eine relativ zum Lochdurchmesser geringe Wandstärke des Bodens eines Verteilkanals oder durch eine Verminderung der effektiven Lochlänge durch Veränderung der Lochgeometrie. Letzteres ist insbesondere bei relativ zur Wandstärke geringen Lochdurchmessern vortsilhaft. Beide Ausführungsbeispiele beziehen sich auf die zweite Variante, wobei der geometrische Lochquerschnitt auf der Unterseite des Bodens des Verteilkanals größer als auf dessen Oberseite ist.

Dies wird bei der Herstellung des Verteilers am einfachsten dadurch verwirklicht, daß zunächst - beispielsweise durch Bohren oder Stanzen - eine durch die gesamte Wandstärke w des Bodens 2 des Verteilkanals 1 gehende Öffnung 3 erzeugt wird, deren Querschnitt den Lochdurchmesser D im oben definierten Sinn festlegt. Anschließend wird von der Unterseite des Bodens 2 her zusätzlich ein - beispielsweise mit dieser Öffnung konzentrisches - Sackloch 4 gebohrt, das einen größeren Durchmesser E aufweist und eine Länge s, die kleiner als die Wandstärke w ist. Die Differenz w - s bildet dann die - gegenüber der durchgehenden Öffnung reduzierte - effektive Lochlänge L.

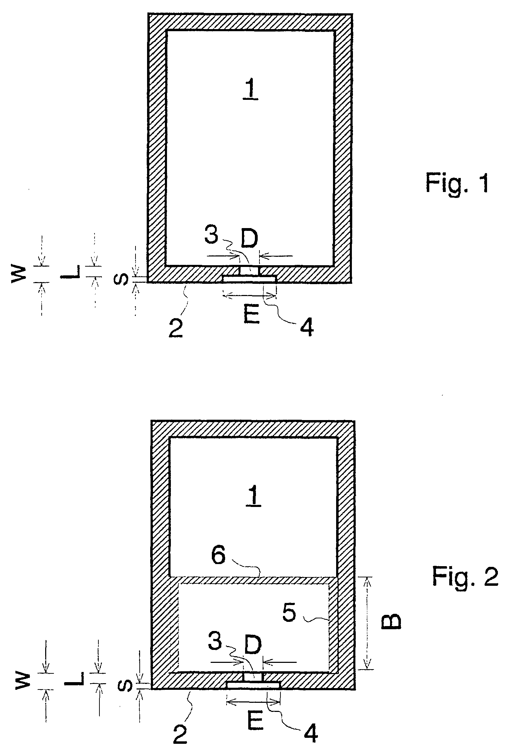

Wie in Figur 2 dargestellt, kann der Verteilkanal zusätzlich ein Lochblech 5 mit einem horizontalen Abschnitt 6 enthalten, das als Strömungszerleger wirkt. Der Abstand B zwischen Boden 2 und horizontalem Abschnitt 6 beträgt beispielsweise 25 bis 45 %, vorzugsweise 30 bis 40 % der Höhe des Verteilkanals. In dem konkreten Beispiel liegt der Wert bei 33 %.

## Patentansprüche

1. Flüssigkeitsverteiler für eine Stoffaustauschkolonne, der mindestens einen Hauptkanal und eine Vielzahl von Verteilkanälen aufweist, die mit dem Hauptkanal in Strömungsverbindung stehen und mit Flüssigkeitsaustrittsöffnungen versehen sind, deren effektive Länge L kleiner als ihr Durchmesser D ist, wobei die effektive Länge L durch den Teil der Begrenzung der Austrittsöffnung festgelegt ist, der im Betrieb des Verteilers von der Flüssigkeit benetzt wird, und der Durchmesser D die maximale lineare Ausdehnung des freien Querschnitts der Flüssigkeitsaustrittsöffnung bezeichnet, **dadurch gekennzeichnet, daß** sich der Lochquerschnitt D der Flüssigkeitsaustrittsöffnungen an der Innenseite der Verteilkanäle von dem Lochquerschnitt E an der Außenseite der Verteilkanäle unterscheidet.

2. Flüssigkeitsverteiler nach Anspruch 1, **dadurch gekennzeichnet, daß** das Verhältnis L/D kleiner oder gleich 0,9 ist.

3. Flüssigkeitsverteiler nach Anspruch 1, **dadurch gekennzeichnet, daß** das Verhältnis L/D kleiner oder gleich 0,8 ist.

4. Flüssigkeitsverteiler nach Anspruch 1, **dadurch gekennzeichnet, daß** das Verhältnis L/D kleiner oder gleich 0,7 ist.

5. Flüssigkeitsverteiler nach Anspruch 1, **dadurch gekennzeichnet, daß** das Verhältnis L/D kleiner oder gleich 0,6 ist.

6. Flüssigkeitsverteiler nach einem der Ansprüche 1 bis 5, **dadurch gekennzeichnet, daß** der Lochquerschnitt D der Flüssigkeitsaustrittsöffnungen an der Innenseite der Verteilkanäle geringer a!s der Lochquerschnitt E an der Außenseite der Verteilkanäle ist.

7. Flüssigkeitsverteiler nach einem der Ansprüche 1 bis 5, **dadurch gekennzeichnet, daß** der Lochquerschnitt D der Flüssigkeitsaustrittsöffnungen an der Innenseite der Verteilkanäle größer als der Lochquerschnitt E an der Außenseite der Verteilkanäle ist.

8. Flüssigkeitsverteiler nach einem der Ansprüche 1 bis 7, **dadurch gekennzeichnet, daß** die Verteilkanäle zumindest teilweise nach oben abgeschlossen sind.

9. Flüssigkeitsverteiler nach einem der Ansprüche 1 bis 8, **dadurch gekennzeichnet, daß** die Verteilkanäle einen kreisförmigen oder rechteckförmigen Querschnitt besitzen.

10. Flüssigkeitsverteiler nach einem der Ansprüche 1 bis 9, **dadurch gekennzeichnet, daß** die Wandstärke W der Verteilkanäle zwischen 1,5 und 12 mm, bevorzugt zwischen 2 und 6 mm liegt.

11. Flüssigkeitsverteiler nach einem der Ansprüche 1 bis 10, **dadurch gekennzeichnet, daß** der Durchmesser D der Flüssigkeitsaustrittsöffnungen 1 bis 10 mm, bevorzugt 2 bis 6 mm beträgt.

12. Flüssigkeitsverteiler nach einem der Ansprüche 1 bis 11, **dadurch gekennzeichnet, daß** die Verteilkanäle aus Aluminium, oder aus Kunststoff bestehen.

13. Flüssigkeitsverteiler nach einem der Ansprüche 1 bis 12, **dadurch gekennzeichnet, daß** die Verteilkanäle aus Strangpreßprofilen oder aus miteinander verbundenen Einzelteilen bestehen.

14. Flüssigkeitsverteiler nach einem der Ansprüche 1 bis 13, **dadurch gekennzeichnet, daß** die Flüssigkeitsaustrittsöffnungen im Boden oder im unteren Drittel der Seitenwände der Verteilkanäle angeordnet sind.

15. Flüssigkeitsverteiler nach einem der Ansprüche 1 bis 14, **gekennzeichnet durch** einen innerhalb der Verteilkanäle im wesentlich horizontal angeordneten Strömungszerleger.

16. Flüssigkeitsverteiler nach Anspruch 15, **dadurch gekennzeichnet, daß** der Strömungszerleger ein Lochblech aufweist.

17. Stoffaustauschkolonne mit einem Verteiler nach einem der Ansprüche 1 bis 16.

18. Verwendung einer Stoffaustauschkolonne nach Anspruch 17 zur Tieftemperaturzerlegung von Luft.

19. Verfahren zum Verteilen von Flüssigkeit in einer Stoffaustauschkolonne mittels eines Flüssigkeitsverteilers, wobei die Flüssigkeit über einen Hauptkanal in eine Vielzahl von Verteilkanälen strömt und aus in den Verteilkanälen befindlichen Flüssigkeitsaustrittsöffnungen austritt, wobei die Flüssigkeit die Flüssigkeitsaustrittsöffnung auf einer Länge benetzt, welche kleiner als der Durchmesser D der Flüssigkeitsaustrittsöffnung ist, wobei der Durchmesser D die maximale lineare Ausdehnung des freien Querschnitts der Flüssigkeitsaustrittsöffnung bezeichnet, **dadurch gekennzeichnet, daß** die Flüssigkeit die Flüssigkeitsaustrittsöffnung auf ihrem gesamten Umfang, jedoch nicht auf ihrer gesamten Länge benetzt.

## Claims

1. Liquid distributor for a mass-transfer column, the liquid distributor having at least one main channel and a multiplicity of distributing channels which are in flow connection with the main channel and are provided with liquid-outlet openings, of which the effective length L is smaller than their diameter D, it being the case that the effective length L is established by that part of the boundary of the outlet opening which is wetted by the liquid during operation of the distributor, and the diameter D denotes the maximum linear extent of the free cross section of the liquid-outlet opening, **characterized in that** the hole cross section D of the liquid-outlet openings on the inside of the distributing channels differs from the hole cross section E on the outside of the distributing channels.

2. Liquid distributor according to Claim 1, **characterized in that** the ratio L/D is smaller than or equal to 0.9.

3. Liquid distributor according to Claim 1, **characterized in that** the ratio L/D is smaller than or equal to 0.8.

4. Liquid distributor according to Claim 1, **characterized in that** the ratio L/D is smaller than or equal to 0.7.

5. Liquid distributor according to Claim 1, **characterized in that** the ratio L/D is smaller than or equal to 0.6.

6. Liquid distributor according to one of Claims 1 to 5, **characterized in that** the hole cross section D of the liquid-outlet openings on the inside of the distributing channels is smaller than the hole cross section E on the outside of the distributing channels.

7. Liquid distributor according to one of Claims 1 to 5, **characterized in that** the hole cross section D of the liquid-outlet openings on the inside of the distributing channels is greater than the hole cross section E on the outside of the distributing channels.

8. Liquid distributor according to one of Claims 1 to 7, **characterized in that** the distributing channels are closed off at least partially towards the top.

9. Liquid distributor according to one of Claims 1 to 8, **characterized in that** the distributing channels have a circular or rectangular cross section.

10. Liquid distributor according to one of Claims 1 to 9, **characterized in that** the wall thickness w of the distributing channels is between 1.5 and 12 mm, preferably between 2 and 6 mm.

11. Liquid distributor according to one of Claims 1 to 10, **characterized in that** the diameter D of the liquid-outlet openings is from 1 to 10 mm, preferably from 2 to 6 mm.

12. Liquid distributor according to one of Claims 1 to 11, **characterized in that** the distributing channels consist of aluminium or of plastic.

13. Liquid distributor according to one of Claims 1 to 12, **characterized in that** the distributing channels comprise extruded profiles or individual parts which are connected to one another.

14. Liquid distributor according to one of Claims 1 to 13, **characterized in that** the liquid-outlet openings are arranged in the base or in the bottom third of the side walls of the distributing channels.

15. Liquid distributor according to one of Claims 1 to 14, **characterized by** a flow separator which is arranged essentially horizontally within the distributing channels.

16. Liquid distributor according to Claim 15, **characterized in that** the flow separator has a perforated plate.

17. Mass-transfer column with a distributor according to one of Claims 1 to 16.

18. Use of a mass-transfer column according to Claim 17 for low-temperature separation of air.

19. Method of distributing liquid in a mass-transfer column by means of a liquid distributor, it being the case that the liquid flows into a multiplicity of distributing channels via a main channel and passes out of liquid-outlet openings located in the distributing channels, it being the case that the liquid wets the liquid-outlet opening over a length which is smaller than the diameter D of the liquid-outlet opening, and it being the case that the diameter D denotes the maximum linear extent of the free cross section of the liquid-outlet opening, **characterized in that** the liquid wets the liquid-outlet opening over its entire circumference, but not over its entire length.

## Revendications

1. Distributeur de liquide pour une colonne d'échange de matière, qui comprend au moins un canal principal et une pluralité de canaux de distribution, qui sont en communication d'écoulement avec le canal principal et qui sont pourvus d'ouvertures de sortie de liquide, dont la longueur effective L est plus petite que leur diamètre D, dans lequel la longueur effective L est fixée par la partie de la surface extérieure de l'ouverture de sortie qui est mouillée par le liquide pendant le fonctionnement du distributeur, et le diamètre D désigne l'extension linéaire maximale de la section transversale libre de l'ouverture de sortie de liquide, **caractérisé en ce que** la section transversale de trou D des ouvertures de sortie de liquide à la face intérieure des canaux de distribution se différencie de la section transversale de trou E à la face extérieure des canaux de distribution.

2. Distributeur de liquide suivant la revendication 1, **caractérisé en ce que** le rapport L/D est inférieur ou égal à 0,9.

3. Distributeur de liquide suivant la revendication 1, **caractérisé en ce que** le rapport L/D est inférieur ou égal à 0,8.

4. Distributeur de liquide suivant la revendication 1, **caractérisé en ce que** le rapport L/D est inférieur ou égal à 0,7.

5. Distributeur de liquide suivant la revendication 1, **caractérisé en ce que** le rapport L/D est inférieur ou égal à 0,6.

6. Distributeur de liquide suivant l'une quelconque des revendications 1 à 5, **caractérisé en ce que** la section transversale de trou D des ouvertures de sortie de liquide à la face intérieure des canaux de distribution est plus petite que la section transversale de trou E à la face extérieure des canaux de distribution.

7. Distributeur de liquide suivant l'une quelconque des revendications 1 à 5, **caractérisé en ce que** la section transversale de trou D des ouvertures de sortie de liquide à la face intérieure des canaux de distribution est plus grande que la section transversale de trou E à la face extérieure des canaux de distribution.

8. Distributeur de liquide suivant l'une quelconque des revendications 1 à 7, **caractérisé en ce que** les canaux de distribution sont au moins en partie fermés vers le haut.

9. Distributeur de liquide suivant l'une quelconque des revendications 1 à 8, **caractérisé en ce que** les canaux de distribution possèdent une section transversale circulaire ou rectangulaire.

10. Distributeur de liquide suivant l'une quelconque des revendications 1 à 9, **caractérisé en ce que** l'épaisseur de paroi W des canaux de distribution est comprise entre 1,5 et 12 mm, de préférence entre 2 et 6 mm.

11. Distributeur de liquide suivant l'une quelconque des revendications 1 à 10, **caractérisé en ce que** le diamètre D des ouvertures de sortie de liquide vaut de 1 à 10 mm, de préférence de 2 à 6 mm.

12. Distributeur de liquide suivant l'une quelconque des revendications 1 à 11, **caractérisé en ce que** les canaux de distribution sont constitués d'aluminium ou de matière plastique.

13. Distributeur de liquide suivant l'une quelconque des revendications 1 à 12, **caractérisé en ce que** les canaux de distribution se composent de profilés extrudés à la presse ou de pièces individuelles assemblées les unes aux autres.

14. Distributeur de liquide suivant l'une quelconque des revendications 1 à 13, **caractérisé en ce que** les ouvertures de sortie de liquide sont disposées dans le fond ou dans le tiers inférieur des parois latérales des canaux de distribution.

15. Distributeur de liquide suivant l'une quelconque des revendications 1 à 14, **caractérisé par** un briseur d'écoulement disposé en position sensiblement horizontale à l'intérieur des canaux de distribution.

16. Distributeur de liquide suivant la revendication 15, **caractérisé en ce que** le briseur d'écoulement présente une tôle perforée.

17. Colonne d'échange de matière, avec un distributeur suivant l'une quelconque des revendications 1 à 16.

18. Utilisation d'une colonne d'échange de matière suivant la revendication 17 pour le fractionnement de l'air à très basse température.

19. Procédé pour distribuer un liquide dans une colonne d'échange de matière au moyen d'un distributeur de liquide, dans lequel le liquide s'écoule par un canal principal dans une pluralité de canaux de distribution et sort par des ouvertures de sortie de liquide se trouvant dans les canaux de distribution, dans lequel le liquide mouille l'ouverture de sortie de liquide sur une longueur qui est inférieure au diamètre D de l'ouverture de sortie de liquide, dans lequel le diamètre D désigne l'extension linéaire maximale de la section transversale libre de l'ouverture de sortie de liquide, **caractérisé en ce que** le liquide mouille l'ouverture de sortie de liquide sur tout son périmètre, mais pas sur toute sa longueur.
